# EUROPEAN PATENT SPECIFICATION

(11) **EP 3 297 958 B1**
(45) Date of publication and mention of the grant of the patent: **13.03.2019**
(21) Application number: 16741714.6
(22) Date of filing: 20.05.2016
(51) Int. Cl.: B01J 20/20, B01J 20/30, B01J 20/28, H01G 11/38, H01G 11/86, B01D 39/20, C02F 1/28, C02F 1/461

(54) **A PRODUCTION METHOD OF AN ELECTRODE**
HERSTELLUNGSVERFAHREN FÜR EINE ELEKTRODE
PROCÉDÉ DE PRODUCTION D'UNE ÉLECTRODE

(30) Priority: 20.05.2015 TR 201506031
(43) Date of publication of application: 28.03.2018
(73) Proprietor: Bayram, Edip, 07058 Konyaalti/Antalya (TR)
(72) Inventor: Bayram, Edip, 07058 Konyaalti/Antalya (TR)
(74) Representative: Cayli, Hülya
(86) International application number: PCT/TR2016/000073
(87) International publication number: WO 2016/186596

(56) References cited:
- EP-A1- 2 070 875
- WO-A1-2014/090508
- US-A1- 2011 020 693

## Description

### Field of the Invention

The present invention relates to a production method of an electrode comprising granulated activated carbon for use in electrosorption applications.

### Background Art

Activated carbons are economic materials obtained through pyrolysis of organic substances at high temperatures, and having a very high surface area and being electrically conductive. Activated carbons are mainly produced in powder or granule form. Activated carbons may be used as an electrode in electrosorption (electro adsorption) process for polluted water treatment or electrical charge storage (i.e. in capacitors). Electrosorption is generally defined as a current or potential-induced adsorption on the surface of the electrically charged solids. Electrical charging is performed with a very low current (0,5-2,0 mA) or potential (0,5-1,5 V). The capacity of electrosorption depends on the electrochemical surface area and conductivity of the material used as electrodes. On the other hand, activated carbons can be used in electrosorption applications only if they take the form of an electrode with a monolithic structure.

In order to form activated carbons into a monolithic structure, a layered structure is used in prior art. In order to produce such structures, powdered activated carbons are mixed with specific cross-linking resins and/or polymer binders and pressed onto a carrying material. Thus, a layer of activated carbon is formed on the carrying material. The surface area and mechanical strength of the electrodes achieved by this method is low since the resin is diffused into the pores of the powdered activated carbons. Also, due to the use of binders, their cost is high. In order to polimerize the resins to increase the mechanical strength; a chemical process is applied, which reduces electrical conductivity of the electrodes. Moreover, in case the electrodes obtained are used in flow systems, they cause a problem of pressure decrease in the system.

In the prior art, US6770736B1 discloses production of activated carbon filters by mixing granular activated carbons with polyethylene powders having a particle size from 5 µm to 300 µm and sintering at a high temperature. However, due to the use of sintering in the said application, the spaces between the activated carbon granules are filled. This results in a decreased surface area of the activated carbon in the filter produced.

Documents EP 2070875 A1 and WO 2014/090508 A1, both disclose a process for preparing an electrode for capacitative deionization of water comprising: forming a composition comprising activated carbon, thermoplastic polymeric binder and water.

### Brief Description of the Invention

With the present invention, there is provided a production method for an electrode comprising activated carbon. Said production method comprises the steps of mixing 5-90% by weight of activated carbon granules with a 5-90% by weight of a thermoplastic powder; adding 3-10% by weight of water to the said mixture; heating the aqueous mixture to 135-145°C; stirring the heated mixture at the said temperature for a predetermined period of time; pouring the hot mixture into a mold and pressing it at a pressure of 500-2000 bar so as to produce an electrode; removing the produced electrode from the mold so as to allow it to cool down.

In the production method according to the present invention, since the mixture of activated carbon granules, thermoplastic and water is heated to 135-145°C, thermoplastic is prevented from being fluidized and fill the space between the activated carbon granules. Furthermore, thanks to the water in the mixture, the mixture is not only made homogeneous, but also heated homogeneously. In this manner, a high surface area of the activated carbon of the electrode produced as a monolithic structure is achieved.

### Object of the Invention

An object of the present invention is to provide a production method for an electrode comprising activated carbon granules, having high surface area.

### Description of the Invention

Activated carbon is a material which has a high surface area and which is mainly used for adsorption process and is generally in powder/granule form. In electrosorption applications, activated carbon is used as electrodes. In case activated carbon is used as an electrode, it must have a monolithic structure. In conventional production methods of monolithic activated carbons, the surface area of the activated carbon is reduced while activated carbon granules are combined. Reduction in the surface area of the activated carbon results in a decrease in efficiency in applications where activated carbon is used as an electrode. Therefore, with the present invention, there is provided a production method of an electrode comprising activated carbon granules and having high surface area.

The production method according to the present invention comprises the steps of mixing 5-90% (preferably 85%) by weight of activated carbon granules with a 5-90% (preferably 15%) by weight of a thermoplastic (i.e. polyethylene) powder; adding 3-10% (preferably 5%) by weight of water to the said mixture; heating the aqueous mixture to 135-145°C (preferably 140°C); stirring the heated mixture at the said temperature for a predetermined period of time; pouring the hot mixture into a mold and pressing it at a pressure of 500-2000 bar (preferably 800 bar) so as to produce an electrode; removing the produced electrode from the mold so as to allow it to cool down.

In the production method according to the present invention, since the said thermoplastic is mixed with powdered activated carbon granules and water, the mixture is made homogeneous. By heating the mixture to 135-145°C, the powdered thermoplastic in the mixture melts and takes liquid form. Since the said temperature is lower than 145°C, the thermoplastic in liquid form is maintained in a thick form. Thus, thermoplastic is not allowed to penetrate into all spaces between the activated carbon granules so that it does not reduce the activated carbon surface area in the electrode produced. Additionally, the water in the mixture ensures that the mixture is homogenous, and also it evaporates during the stirring at the said temperature to allow the mixture to be heated homogenously. In the electrode production method according to the present invention, since the activated carbon granules are not bound onto a carrying material and not sintered, the surface area of activated carbon in the electrodes produced is increased.

In an illustrative embodiment of the invention, the size of the said active carbon granules is in the range of 0,5-1,5 mm. In another illustrative embodiment, the size of the said thermoplastic powders is in the range of 0,1-0,5 mm. Said size is varied based on the physical properties of the electrode to be produced (i.e. conductivity and iodine index). In a preferred embodiment of the invention, said production method comprises the step of bringing the activated carbon granules and thermoplastic powder to the desired dimensions before the step of mixing the activated carbon granules with the thermoplastic powder. Bringing the activated carbon granules and thermoplastic powder to the desired dimensions is preferably performed by using a sieve. In an illustrative embodiment, activated carbon granules are passed through a sieve and separated into two groups of 0,5-1mm and 1-1,5mm. Similarly, said thermoplastic powder is passed through a sieve and separated into two groups of 0,1-0,315mm and 0,315-0,5mm. Based on the physical properties of the electrode to be produced, the size of the activated carbon granules and that of the thermoplastic powder to be mixed to each other may vary. In illustrative embodiments, activated carbon granules of 0,5-1mm and thermoplastic powder of 0,1-0,315mm; activated carbon granules of 0,5-1mm and thermoplastic powder of 0,315-0,5mm; activated carbon granules of 1-1,5mm and thermoplastic powder of 0,1-0,315mm; activated carbon granules of 1-1,5mm and thermoplastic powder of 0,315-0,5mm may be mixed together. In this manner, the obtained electrode has the desired physical properties.

In the electrode production method according to the present invention, said molds may be selected based on the shape and size of the electrodes to be produced. In illustrative embodiments, said molds may be cylindrical, elliptic or prismatic.

In the production method according to the present invention, since the mixture of activated carbon granule, thermoplastic and water is heated to 135-145°C, thermoplastic is prevented from being fluidized and filling the space between the activated carbon granules. Furthermore, thanks to the water in the mixture, the mixture is not only made homogeneous, but also heated homogeneously. In this manner, a high surface area of the activated carbon of the electrode produced as a monolithic structure is achieved.

## Claims

1. A production method of an electrode comprising activated carbon, **characterized by** comprising the following steps:
- mixing 5-90% by weight of activated carbon granules with a 5-90% by weight of a thermoplastic powder;
- adding 3-10% by weight of water to the said mixture;
- heating the aqueous mixture to 135-145°C;
- stirring the heated mixture at the said temperature for a predetermined period of time;
- pouring the hot mixture into a mold and pressing it at a pressure of 500-2000 bar so as to produce an electrode;
- removing the produced electrode from the mold so as to allow it to cool down.

2. A production method according to claim 1, **characterized in that** said thermoplastic is polyethylene.

3. A production method according to claim 1, **characterized in that** at the step of mixing activated carbon granules and thermoplastic powder, activated carbon granules are, by weight, 85%.

4. A production method according to claim 1, **characterized in that** at the step of mixing activated carbon granules and thermoplastic powder, thermoplastic powder is, by weight, 15%.

5. A production method according to claim 1, **characterized in that** at the step of adding water to the mixture, the water is, by weight, 5%.

6. A production method according to claim 1, **characterized in that** at the step of heating the mixture, temperature is 140°C.

7. A production method according to claim 1, **characterized in that** at the step of pouring the hot mixture into the mold and pressing it, the pressure is 800 bar.

8. A production method according to claim 1, **characterized by** comprising the step of bringing the activated carbon granules and thermoplastic powder to the desired dimensions before the step of mixing the activated carbon granules with the thermoplastic powder.

## Patentansprüche

1. Herstellungsverfahren einer Aktivkohle aufweisenden Elektrode, **dadurch gekennzeichnet, dass** das Verfahren die folgenden Schritte umfasst:
- Mischen von 5-90 Gew.% Aktivkohlegranulat mit 5-90 Gew.% eines thermoplastischen Pulvers,
- Hinzufügen von 3-10 Gew.% Wasser zu der Mischung,
- Erhitzen des wässrigen Gemischs auf 135-145°C,
- Rühren des auf diese Temperatur aufgeheizten Gemisches für eine vorgegebene Zeitperiode,
- Gießen des heißen Gemisches in eine Form und Pressen des Gemisches bei einem Druck von 500-2000 Bar, um so eine Elektrode herzustellen,
- Entnehmen der hergestellten Elektrode aus der Form, um ihr Abkühlen zu erlauben.

2. Herstellungsverfahren nach Anspruch 1, **dadurch gekennzeichnet, dass** der Thermoplast Polyethylen ist.

3. Herstellungsverfahren nach Anspruch 1, **dadurch gekennzeichnet, dass** beim Schritt des Mischens von Aktivkohlegranulat und thermoplastischem Pulver 85 Gew.% Aktivkohlegranulat vorhanden ist.

4. Herstellungsverfahren nach Anspruch 1, **dadurch gekennzeichnet, dass** beim Schritt des Mischens von Aktivkohlegranulat und thermoplastischem Pulver 15 Gew.% thermoplastisches Pulver vorhanden sind.

5. Herstellungsverfahren nach Anspruch 1, **dadurch gekennzeichnet, dass** beim Schritt des Hinzufügens von Wasser zu der Mischung 5 Gew.% Wasser vorhanden ist.

6. Herstellungsverfahren nach Anspruch 1, **dadurch gekennzeichnet, dass** beim Schritt des Erhitzens des Gemisches die Temperatur 140°C ist.

7. Herstellungsverfahren nach Anspruch 1, **dadurch gekennzeichnet, dass** beim Schritt des Gießens des heißen Gemisches in die Form und beim Pressen des Gemisches der Druck 800 Bar beträgt.

8. Herstellungsverfahren nach Anspruch 1, **dadurch gekennzeichnet, dass** es den Schritt beinhaltet, dass Aktivkohlegranulat und das thermoplastische Pulver vor dem Schritt des Mischens des Aktivkohlegranulats mit dem thermoplastischen Pulver auf die gewünschten Dimensionen zu bringen.

## Revendications

1. Procédé de production d'une électrode comprenant du charbon actif, **caractérisé en ce qu'**il comprend les étapes suivantes :
- mélange de 5 à 90 % en poids de granules de charbon actif avec 5 à 90 % en poids d'une poudre thermoplastique ;
- addition de 3 à 10 % en poids d'eau audit mélange ;
- chauffage du mélange aqueux entre 135 et145 °C ;
- agitation du mélange chauffé à ladite température pendant une période de temps prédéterminée ;
- versement du mélange chaud dans un moule où il est pressé à une pression de 500 à 2 000 bars de façon à produire une électrode ;
- retrait de l'électrode produite à partir du moule afin de lui permettre de refroidir.

2. Procédé de production selon la revendication 1, **caractérisé en ce que** ledit matériau thermoplastique est le polyéthylène.

3. Procédé de production selon la revendication 1, **caractérisé en ce qu'**à l'étape du mélange des granules de charbon actif et de la poudre thermoplastique, les granules de charbon actif représentent 85 % en poids.

4. Procédé de production selon la revendication 1, **caractérisé en ce qu'**à l'étape du mélange des granules de charbon actif et de la poudre thermoplastique, la poudre thermoplastique représente 15 % en poids.

5. Procédé de production selon la revendication 1, **caractérisé en ce qu'**à l'étape d'addition d'eau au mélange, l'eau représente 5 % en poids.

6. Procédé de production selon la revendication 1, **caractérisé en ce qu'**à l'étape de chauffage du mélange, la température est de 140 °C.

7. Procédé de production selon la revendication 1, **caractérisé en ce qu'**à l'étape du versement du mélange chaud dans le moule et de son pressage, la pression est de 800 bars.

8. Procédé de production selon la revendication 1, **caractérisé en ce qu'**il comprend l'étape visant à amener les granules de charbon actif et la poudre thermoplastique aux dimensions souhaitées avant l'étape de mélange des granules de charbon actif avec la poudre thermoplastique.
